Europäisches Patentamt

European Patent Office

Office européen des brevets

(19)

(11) Numéro de publication : **0 192 691**
**B1**

(12)

# FASCICULE DE BREVET EUROPÉEN

(45) Date de publication du fascicule du brevet :
**04.05.88**

(21) Numéro de dépôt : **85904262.4**

(22) Date de dépôt : **02.09.85**

(86) Numéro de dépôt international :
**PCT/FR 85/00235**

(87) Numéro de publication internationale :
**WO/8601389 (13.03.86 Gazette 86/06)**

(51) Int. Cl.⁴ : **A 47 K 10/00, D 21 H 1/08, B 32 B 3/08**

---

(54) **PAPIER CONTINU STRATIFIE.**

---

(30) Priorité : 03.09.84 GB 8422221
29.03.85 GB 8508249

(43) Date de publication de la demande :
03.09.86 Bulletin 86/36

(45) Mention de la délivrance du brevet :
04.05.88 Bulletin 88/18

(84) Etats contractants désignés :
AT BE CH DE FR IT LI LU NL SE

(56) Documents cités :
DE-A- 2 062 625
FR-A- 1 565 169
FR-A- 1 602 850
FR-A- 2 227 125
FR-A- 2 350 197
GB-A-  804 282

(73) Titulaire : **KAYSERSBERG SA**
**Route de Lapoutroie**
**F-68240 Kaysersberg (FR)**

(72) Inventeur : **GOLDSTEIN, Guy**
**3, rue Oberlin**
**F-68000 Colmar (FR)**
Inventeur : **ROUSSIN-MOYNIER, Yves**
**4, rue André Malraux**
**F-68000 Wintzenheim (FR)**
Inventeur : **THOMAS, Gareth, William, Martel**
**Woodmans The Street Boxley**
**Maidstone Kent (GB)**
Inventeur : **VANHOUCKE, Guy**
**6, Promenade Saint-Leufroy**
**F-92150 Suresnes (FR)**

(74) Mandataire : **David, Daniel**
**KAYSERSBERG 54, avenue Hoche**
**F-75008 Paris (FR)**

Jouve, 18, rue St-Denis, 75001 Paris, France

## Description

L'invention concerne un papier continu stratifié destiné à être utilisé comme essuie-mains à rouleau.

On cherchait depuis longtemps à remplacer par un matériau aussi performant les serviettes en coton qui, traditionnellement utilisées dans les appareils à essuie-mains, n'en revenaient pas moins fort cher à fabriquer et entraînaient des coûts de blanchissement élevés. Plusieurs approches avaient été adoptées en ce sens, qui visaient à réaliser des rouleaux de papier aptes à remplacer ceux en coton. Or, le principal inconvénient que ces produits soulevèrent à l'usage résidait dans leur forte tendance à se rompre, en particulier lorsqu'ils se trouvaient à l'état humide. C'est pour cette raison que les rouleaux de papier n'ont pu donner de bons résultats dans leur application aux essuie-mains à rouleau rechargeables par rembobinage car, si la serviette venait à se rompre, cette opération nécessitant l'ouverture du dispositif exigeait d'être effectuée par un responsable d'entretien. Les principales qualités requises des produits en papier affectés à cet usage émargent à leur forte capacité d'absorption et à leur robustesse.

La capacité d'absorption du produit selon l'invention lui est assurée par la présence de deux couches de papier en ouate de cellulose, du type utilisé dans la fabrication des serviettes en papier à usage domestique par exemple. Pour renforcer la serviette en papier durant son emploi, c'est-à-dire lorsqu'un utilisateur s'y essuie les mains, les deux couches de papier ont été contre-collées de part et d'autre d'un film plastique perforé. Ce film contribue non seulement à préserver l'intégrité du papier continu lorsqu'il est mouillé puisqu'en permettant également à l'humidité de le pénétrer rapidement sur toute son épaisseur, il garantit ainsi de tirer pleinement parti de la qualité d'absorption présentée par les deux couches de papier.

Il est déjà connu de réaliser un papier continu stratifié comprenant deux couches de papier et une couche constituée par un non-tissé réalisé à partir de fibres plastiques. Ce papier est décrit dans le brevet FR-A.2350197.

Les conditions qui prévalent à l'utilisation des essuie-mains à rouleau exposent généralement les serviettes à des efforts très intenses au moment où elles sont tirées de leur support. Dans la mesure ou l'utilisateur agrippera naturellement la serviette par ses bords pour s'essuyer les mains, c'est bien évidemment dans ces zones que les efforts qui lui seront alors appliqués tendront à s'exercer en grande majorité. C'est précisément afin de leur conférer un surcroît de résistance, en particulier lorsqu'elles ont été mouillées, que des bandes de renfort en film plastique ont été disposées le long des deux bords du papier continu. Capables de supporter un degré d'effort très élevé, ces bandes empêcheront que des déchirures prenant naissance aux bords ne se propagent dans la largeur du papier continu.

La présente invention propose un papier continu stratifié à liserés de renfort parallèles qui, destiné à être utilisé comme essuie-mains à rouleau, comprend essentiellement deux couches de papier en ouate de cellulose entre lesquelles est insérée et fixée par adhésif une couche de film plastique perforé. Il est caractérisé en ce que des bandes en film plastique ont été disposées entre l'une des couches de papier en ouate de cellulose et la couche de film plastique, le long des deux bords du papier continu, et que des fils de renfort agencés de manière espacée parallèlement au papier continu dans le sens de sa longueur sont disposés au moins dans les zones couvertes par les bandes.

Il est recommandé de réaliser la couche intermédiaire de film plastique en matériau non tissé.

Bien qu'elles soient douées d'une grande résistance, les bandes sont incapables de soustraire complètement le papier continu aux effets des efforts très intenses qui lui sont soudainement appliqués, en particulier au moment où le mécanisme d'arrêt de l'essuie-mains se déclenche. Afin qu'il puisse résister à pareilles sollicitations, des fils de renfort spéciaux orientés parallèlement à sa longueur lui ont été incorporés le long de ses bords ; de préférence, au moins quelques-uns d'entre eux s'étendent au-delà des bords intérieurs des bandes de renfort, dans une zone qui leur est immédiatement adjacente.

La description suivante illustre un mode de réalisation selon l'invention, en référence aux dessins annexés dans lesquels :

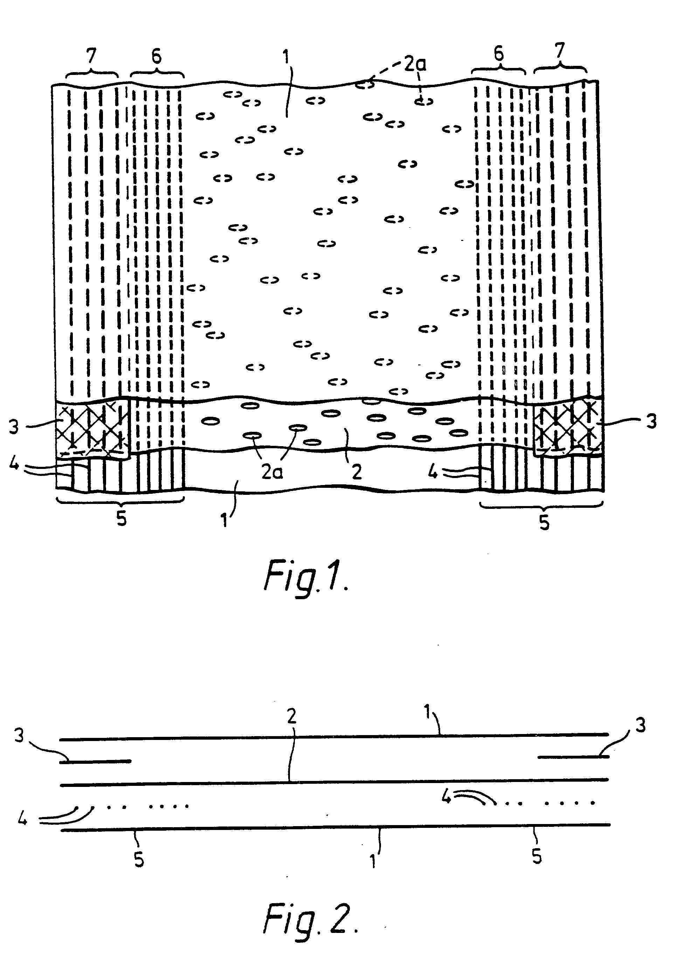

La figure 1 représente une vue en plan partielle du papier continu, et la figure 2 en représente une vue en coupe schématique.

Le papier continu comprend deux couches de ouate de cellulose crêpée 1 entre lesquelles est collée une couche de film plastique perforé non tissé 2. Des bandes de renfort en film plastique 3 sont disposées le long de chaque bord du papier continu. Des fils de renfort 4 ont été prévus à la fois dans la zone couverte par les bandes 3 et dans celle de la pièce de papier qui leur est adjacente. Les différents éléments constitutifs du papier continu sont maintenus solidaires au moyen d'un adhésif.

Les deux couches externes de ouate de cellulose crêpée 1 peuvent être réalisées en n'importe quelle ouate de cellulose offrant un toucher et une capacité d'absorption convenables. Chaque couche présentera de préférence un grammage de base compris entre un minimum d'environ 15 g/m² et un maximum de l'ordre de 80 g/m². Le grammage préconisé est de 26 g/m².

La couche intermédiaire de film plastique perforé 2 sera convenablement constituée par un film de polypropylène présentant un grammage de base compris entre 7 et 15 g/m². Le choix portera de préférence sur le SCRINYL fabriqué par Béghin-Say S.A. (Marque Commerciale Déposée), comportant un film de polypropylène renforcé par des filaments de polyamide et présentant un grammage de base de 11 g/m², qui sera gaufré puis étiré de manière à y pratiquer les perforations 2a qui lui conféreront la structure ouverte recherchée.

Cette couche intermédiaire peut être réalisée au moyen d'autres films plastiques ainsi qu'en non-tissés fabriqués par filature directe ou en textiles tissés, pour autant que ces matériaux offrent les qualités de drapé et de douceur requises.

Les bandes de renfort 3 ont pour fonction de maintenir intacts les bords de la serviette et, associées aux fils, de contribuer à les soustraire aux risques d'éclatement auxquels ils sont exposés. Les matériaux plastiques susceptibles d'être retenus pour confectionner ces bandes intéressent une large gamme de produits puisqu'il peut s'agir de films ou de canevas légers de plastique souple réalisés en polypropylène, polyéthylène, polyamide ou polyester. Selon leur nature, ces matériaux présenteront un grammage compris entre 8 et 20 g/m². Les bandes proprement dites pourront également incorporer des filaments de renfort : la priorité sera toutefois accordée aux films de polypropylène présentant un grammage de base de 15 g/m², chargés de filaments de renfort en polyamide.

Dans la mesure où les bandes amoindrissent la douceur et le toucher de la serviette, il est important que leur largeur soit strictement limitée à la valeur leur permettant d'assumer leur fonction de renfort.

Pour un papier continu de 200 mm de large, la largeur des bandes n'excédera pas de préférence 40 mm et, mieux encore, sera inférieure à 30 mm, 25 mm par exemple.

Comme il a été précisé auparavant, il est essentiel de renforcer la serviette en papier continu dans les zones dont se saisira l'utilisateur, en particulier celles où les pouces viendront normalement s'appliquer. Afin d'éviter d'avoir recours à des bandes plus larges, des fils de renfort se présentant sous la forme des fils multi-filaments 4 sont disposés dans le sens du papier continu, le long de chacun de ses bords, sur une aire 5 d'une largeur d'environ 60 mm. Le nombre de fils 4 disposés le long des zones en bordure du papier variera en fonction du matériau dont ils sont constitués et du degré de renfort recherché. De manière convenable, les fils seront réalisés en matière plastique, notamment en multi-filaments de polyester, encore que des fibres naturelles telles que le coton puissent également être utilisées. Les fils appartenant à la même zone 5 peuvent différer les uns des autres, puisqu'on peut par exemple faire appel à une combinaison de fils de polyamide et de polyester. Dans un mode de réalisation préféré de l'invention, chaque zone en bordure 5 comporte cinq fils multi-filaments en polyester 6 de 280 g/10 000 m et quatre fils multi-filaments en polyamide 7 de 470 g/10 000 m. Les fils peuvent également être réalisés en un même matériau, mais suivant différents diamètres.

Bien que les fils 4 représentés sur la figure 2 aient été implantés du côté de la couche de film 2 opposé aux bandes 3, ils peuvent aussi bien l'être du même côté de cette couche 2 et, en ce cas, sur l'un et l'autre des bords couverts par les bandes 3. Si le papier continu peut être muni de fils de renfort sur toute sa largeur, leur couverture sera de préférence limitée en largeur aux seules zones correspondant précisément à celles dont l'utilisateur se saisira pour s'essuyer les mains.

Les bandes et les fils sont incorporés au stratifié au moyen d'un adhésif approprié tel que l'acétate de polyvinyle (PVA). L'adhésif est appliqué à la couche 2 et aux bandes 3 au moyen d'une encolleuse à rouleaux. Les fils 4 peuvent être encollés en les faisant passer dans un bain d'adhésif.

On comprendra que le papier continu configurant un essuie-mains à rouleau est fabriqué à partir d'une pièce de papier continu plus large, de huit fois par exemple. Les bandes et les fils alors disposés à intervalles réguliers sur la largeur de cette pièce de départ présenteront en ce cas une largeur double de celle requise sur chacun des bords du produit fini. A la finition, une simple découpe opérée au centre des bandes permettra de dégager huit rouleaux dans la pièce de papier continu.

La résistance à la rupture d'une serviette réalisée conformément au procédé selon l'invention peut atteindre un niveau extrêmement élevé, qui pourra aller jusqu'à 100 kg sur la largeur totale.

L'invention sera illustrée à l'appui d'un exemple spécifique d'un papier continu réalisé suivant une structure et à partir de matériaux préférentiels.

Exemple de réalisation

On a fabriqué un papier continu d'une largeur de 200 mm, dont les couches externes étaient formées de deux feuilles en ouate de cellulose crêpée absorbante présentant une grammage de base de 26,5 g/m² et dont la couche intermédiaire était réalisée en SCRINYL (Marque Commerciale Déposée), matériau fabriqué par Béghin-Say S.A. Offrant un grammage de base de 11 g/m², le SCRINYL qui comportait un film de polypropylène (95 %) renforcé par des fils de polyamide (5 %), a été gaufré puis étiré de manière à dégager la structure ouverte recherchée. Le stratifié a été renforcé au moyen de bandes et de fils qui, disposés dans le sens du papier, ont été contrecollés à la couche de SCRINYL par un adhésif PVA de 9 g/m² à sec, qui fut appliqué au film et aux bandes au cylindre enducteur. Les fils ont également été encollés en les faisant passer dans un bain d'adhésif. Une bande de 2,5 cm de large a été apposée de chaque côté du film. Ces bandes se composaient d'un film de polypropylène associé à des filaments de renfort en polyamide disposés dans le sens du papier, pour un grammage de base de 15 g/m². Neuf fils de renfort multi-filaments ont été implantés de manière espacée de chaque côté du papier continu, sur une largeur d'environ 60 mm.

Le papier continu à l'état fini dont le grammage de base total était compris entre 78 et 83 g/m², présentait une résistance maximale à la rupture par traction de l'ordre de 80 kg. Il disposait d'une excellente résistance au déchirement dans le sens de sa largeur, tandis que les fils de renfort lui assuraient une bonne protection contre l'éclatement dans les zones dont se saisit habituellement l'utilisateur.

## Revendications

1. Papier continu stratifié à liserés parallèles renforcés, destiné à être utilisé comme essuie-mains à rouleau, comprenant une couche (2) constituée par un film plastique perforé, insérée entre deux couches (1) en ouate de cellulose, l'ensemble étant réuni au moyen d'adhésif, caractérisé en ce que des bandes (3) constituées par un film plastique sont disposées entre une des couches (1) de ouate de cellulose et la couche de film plastique (2) le long des deux bords du papier continu, et que des fils de renfort (4) agencés de manière espacée parallèlement au papier continu dans le sens de sa longueur sont disposés au moins dans les zones couvertes par les bandes (3), assurant ainsi une résistance renforcée des bandes.

2. Papier continu stratifié selon la revendication 1, caractérisé en ce que la couche (2) de film plastique perforé est réalisée en matériau non tissé.

3. Papier continu stratifié selon la revendication 2, caractérisé en ce que la couche (2) de film plastique perforé non tissé comporte un film de polypropylène renforcé par des filaments de polyamide, traité par gaufrage puis étirage en vue d'y pratiquer des perforations.

4. Papier continu stratifié selon la revendication 1, caractérisé en ce que les fils de renfort sont implantés outre dans les zones couvertes par les bandes (3), dans celles qui leur sont intérieurement adjacentes dans le sens de la largeur du papier.

5. Papier continu stratifié selon la revendication 4, caractérisé en ce que quelques fils de renfort (4) au moins sont constitués par des fils polyester multi-filaments.

6. Papier continu stratifié selon l'une des revendications 4 à 5, caractérisé en ce que quelques fils de renfort (4) au moins sont constitués par des fils polyamide multi-filaments.

7. Papier continu stratifié selon l'une quelconque des revendications précitées, caractérisé en ce que les bandes (3) sont constituées d'un film de polypropylène renforcé par des filaments de polyamide.

## Claims

1. Laminated continuous paper having reinforced parallel borders, intended to be used as a roller hand-towel, comprising a layer (2) formed by a perforated plastic film inserted between the two layers (1) of cellulose wadding, the assembly being combined by means of adhesive, characterised in that strips (3) formed by a plastic film are disposed between one of the layers (1) of cellulose wadding and the layer of plastic film (2) along both edges of the continous paper, and in that reinforcing threads (4) arranged at intervals parallel to the continous paper in the direction of its length are disposed at least in the zones covered by the strips (3), thus ensuring reinforced strength of the strips.

2. Laminated continuous paper according to claim 1, in (sic) characterised in that the layer (2) of perforated plastic film is produced from a nonwoven material.

3. Laminated continuous paper according to Claim 2, characterised in that the layer (2) of nonwoven perforated plastic film comprises a polypropylene film reinforced with nylon filaments, treated by embossing then drawing in order to make perforations therein.

4. Laminated continuous paper according to Claim 1, characterised in that the reinforcing threads are implanted not only in the zones covered by the strips (3), but also in those which are inwardly adjacent thereto in the direction of the width of the paper.

5. Laminated continuous paper according to Claim 4, characterised in that at least some reinforcing threads (4) are constituted by multi-polyester threads.

6. Laminated continuous paper according to one of Claims 4 or 5, characterised in that at least some reinforcing threads (4) are constituted by multi-filament nylon threads.

7. Laminated continuous paper according to any one of the preceding claims, characterised in that the strips (3) are constituted by a polypropylene film reinforced by nylon threads.

## Patentansprüche

1. Endlosschichtpapier das an parallelen Rändern verstärkt ist zur Verwendung als aufrollbares Handtuch mit einer Schicht (2) aus perforierter Kunststoffolie, die zwischen zwei Schichten (1) aus Zellwatte angeordnet ist, wobei die Anordnung durch ein Klebmittel zusammengehalten ist, dadurch gekennzeichnet, daß Streifen (3) einer Kunststoffolie entlang den Rändern des Endlospapiers zwischen den Schichten (1) aus Zellwatte angeordnet sind und daß beabstandete Verstärkungsfäden (4) parallel zum Endlospapier in dessen Längsrichtung mindestens im Bereich der Streifen (3) angeordnet sind, die die Festigkeit der Streifen (3) verstärken.

2. Endlosschichtpapier nach Anspruch 1, dadurch gekennzeichnet, daß die Schicht (2) aus perforierter Kunststoffolie aus nichtgewebtem Material besteht.

3. Endlosschichtpapier nach Anspruch 1, dadurch gekennzeichnet, daß die Schicht (2) aus perforierter nicht-gewebeartiger Kunststoffolie eine Polypropylenfolie enthält, die durch Polyamidfasern verstärkt ist und die durch Pressen und Strecken behandelt wird zur Bildung der Perforation.

4. Endlosschichtpapier nach Anspruch i, dadurch gekennzeichnet, daß die Verstärkungsfäden über die Bereiche, die von den Streifen (3) bedeckt sind, hinaus nach innen angeordnet sind über die Breite gesehen.

5. Endlosschichtpapier nach Anspruch 4, dadurch gekennzeichnet, daß die Verstärkungsfäden mindestens aus Vielfachpolyesterfasern bestehen.

6. Endlosschichtpapier nach Anspruch 4 oder 5, dadurch gekennzeichnet, daß die Verstärkungsfäden mindestens aus Vielfachpolyamidfasern bestehen.

7. Endlosschichtpapier nach einem der vorangegangenen Ansprüche, dadurch gekennzeichnet, daß die Streifen (3) aus einer Polypropylenfolie bestehen, die durch Polyamidfasern verstärkt ist.

Fig.1.

Fig. 2.